# EUROPEAN PATENT SPECIFICATION

(11) **EP 1 554 882 B1**
(45) Date of publication and mention of the grant of the patent: **08.09.2010**
(21) Application number: 03765565.1
(22) Date of filing: 15.07.2003
(51) Int. Cl.: H04N 7/18, H04N 7/173

(54) **CENTRALIZED IN-HOME UNIT TO PROVIDE VIDEO AND DATA TO MULTIPLE LOCATIONS**
ZENTRALISIERTE HEIMEINHEIT ZUR BEREITSTELLUNG VON VIDEO UND DATEN F R MEHRERE STANDORTE
UNITE CENTRALISEE A DOMICILE ASSURANT LA TRANSMISSION DE VIDEO ET DE DONNEES EN DES POINTS MULTIPLES

(30) Priority: 22.07.2002 US 201537
(43) Date of publication of application: 20.07.2005
(73) Proprietor: SBC Properties, L.P., Reno, NV 89502 (US)
(72) Inventor: ANSARI, Ahmad, Austin, TX 78729 (US); PHILLIPS, Debra, Ann, Austin, TX 78731 (US)
(74) Representative: McLeish, Nicholas Alistair Maxwell
(86) International application number: PCT/US2003/021939
(87) International publication number: WO 2004/010680

(56) References cited:
- WO-A-00/22821
- US-A1- 2002 002 709
- US-A1- 2002 019 984
- US-A1- 2002 059 634
- US-B1- 6 188 871
- US-B1- 6 598 231
- DIEULEVEULT F DE: "TRANSMISSION VIDEO SUR PAIRE TORSADEE" ELECTRONIQUE RADIO PLANS, SPE, PARIS, FR, no. 545, 1 April 1993 (1993-04-01), pages 25-32, XP000368046 ISSN: 1144-5742

## Description

### BACKGROUND OF THE INVENTION

1. Field of the Invention

The present invention relates to video and broadband data services.

2. Description of the Related Art

Cable companies use a cable network infrastructure to delivering entertainment video services and broadband data services to home users. To increase their market share, cable companies are using the infrastructure to offer new services and products. However, integration of video and data services from the cable network to multiple television sets and personal computers in the home is still under development. The migration from analog to digital television sets requires a deployment of either digital set-top boxes or digital television sets capable of decoding digital video streams. Digital set-top boxes may be used in conjunction with existing analog television sets to receive and convert digital video content to a corresponding analog television signal. Multiple digital set-top boxes would be deployed in homes having multiple analog television sets. In these homes, operating, maintaining, managing and deploying multiple digital set-top boxes would be undesirable.

### BRIEF DESCRIPTION OF THE DRAWINGS

The present invention is defined by the appended claims. However, other features are described in the following detailed description in conjunction with the accompanying drawings in which:

FIG. 1 is a block diagram of an embodiment of a system to provide video and broadband data services to multiple televisions and computers in a home; and

FIG. 2 is a block diagram of another embodiment of a system to provide video and broadband data services to multiple televisions and computers in a home.

### DETAILED DESCRIPTION OF THE PREFERRED EMBODIMENTS

Disclosed herein are single centralized units to deliver digital and/or analog video and broadband data services to multiple televisions and computers in a home. Home data networking may be accomplished using either a coaxial distribution network used for video inside the home, or a standard-based home networking technology such as Home Phoneline Networking Alliance (HomePNA) or another telephone line networking technology, wireless, Category 5 cabling, or optical fiber if available. In contrast to deploying individual set-top boxes, the disclosed centralized unit lowers the overall cost of providing video and data services to multiple television sets and computers.

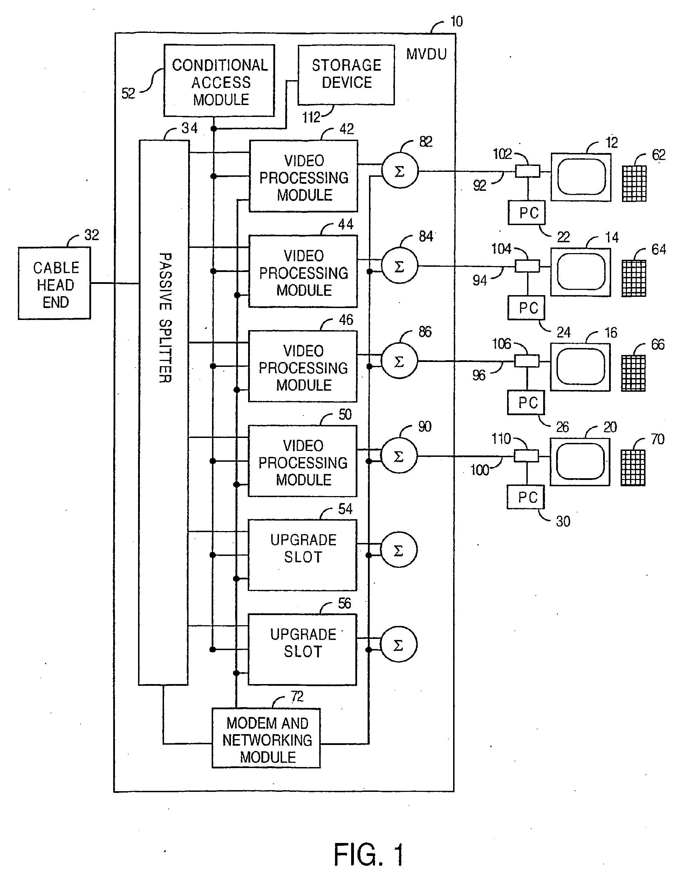

FIG. 1 is a block diagram of an embodiment of a system to provide video and broadband data services to multiple televisions and computers in a home. The system comprises a multi-channel video/data unit (MVDU) 10. The MVDU 10 serves to provide multi-channel digital video services to multiple television sets 12, 14, 16 and 20 in the home without the need for multiple set-top boxes within the home. Further, the MDVU 10 serves to provide broadband data services to multiple personal computers (PCs) 22, 24, 26 and 30 in the home.

Combined video service and broadband data service signals are provided to the home by a head end 32 of a cable television system. The video service signals may include any combination of broadcast video channels, pay-per-view (PPV) channels, and near video-on-demand (NVOD) channels provided by the cable head end 32. The broadband data signals may be in accordance with a cable broadband signal standard such as Data Over Cable Service Interface Specification (DOCSIS). For the purpose of this patent application, the term "video" should be construed as being inclusive of both video with accompanying audio and video without accompanying audio.

The MVDU 10 comprises a passive splitter 34 to split incoming signals from the cable head end 32 into multiple video service signal ports and a broadband data signal port. The passive splitter 34 may be embodied by a diplex filter to separate broadband data service signals in one frequency band from video service signals in another frequency band. Other splitters, including active splitters, also are within the scope of this disclosure.

The MVDU 10 further comprises a plurality of video processing modules, one per television set in the home. For purposes of illustration and example, four video processing modules 42, 44, 46 and 50 are depicted, although any plurality of video processing modules may be employed. Each of the video processing modules 42, 44, 46 and 50 has a corresponding input coupled to a corresponding video service signal port of the passive splitter 34. Each video processing module performs video processing acts such as channel tuning, signal decoding, format converting and PIP functions for its associated television set. A conditional access module 52 enables the video processing modules 42, 44, 46 and 50 to receive and descramble premium channels, if necessary.

Preferably, each video processing module is embodied by a removable card that facilitates installation in and removal from the MVDU 10. In this case, the MVDU 10 has a plurality of card-receiving slots to receive a plurality of video processing modules. For purposes of illustration and example, the MVDU 10 may have six card-receiving slots to receive at most six video processing modules. Thus, with four video processing modules in the MVDU 10, two card-receiving slots 54 and 56 are unoccupied. The MVDU 10 may be upgraded to accommodate more than four television sets by installing one or two video processing modules in the two card-receiving slots 54 and 56. Alternatively, some of the video processing modules 42, 44, 46 and 50 may be permanently integrated with the MVDU 10, in other words, may be non-removable from the MVDU 10.

The system comprises a plurality of remote control devices 62, 64, 66 and 70 to facilitate independent user control of programming to the television sets 12, 14, 16 and 20, respectively. Each of the remote control devices 62, 64, 66 and 70 controls acts performed by a corresponding one of the video processing modules 42, 44, 46 and 50, respectively. Preferably, each remote control device communicates with its associated video processing module by a wireless link. Alternatively, a remote control device may communicate with a video processing module by a wireline connection.

Each video processing module generates a television signal based on a video service signal. To generate the television signal, each video processing module may include a radio frequency (RF) modulator which generates a standard television signal on a specific frequency. Examples of the standard television signal include, but are not limited to, National Television Systems Committee (NTSC), digital High-Definition Television (HDTV), digital Standard-Definition Television (SDTV), Phase Alternation each Line (PAL) and Sequential Color with Memory (SECAM). Examples of the specific frequency include, but are not limited to, frequencies corresponding to Very High Frequency (VHF) channels 3 or 4.

The broadband data signals split by the passive splitter 34 are provided to a modem and networking module 72. An example of the modem in the module 72 includes, but is not limited to, a DOCSIS cable modem. The module 72 extracts/demodulates the broadband data information and generates a data networking signal based thereon. Preferably, the data networking signal is in accordance with an Ethernet standard to communicate (i.e. transmit and receive) data with the personal computers 22, 24, 26 and 30. The module 72 further modulates received data from the personal computers 22, 24, 26 and 30 for transmission to the cable head end 32.

The MVDU 10 comprises combiners 82, 84, 86 and 90 to combine television signals produced by the video processing modules 42, 44, 46 and 50, respectively, with the data networking signals (e.g. Ethernet signals) produced by the modem and networking module 72. A coaxial cable 92 communicates a first combined signal produced by the combiner 82 to the television 12 and the personal computer 22. A coaxial cable 94 communicates a second combined signal produced by the combiner 84 to the television 14 and the personal computer 24. A coaxial cable 96 communicates a third combined signal produced by the combiner 86 to the television 16 and the personal computer 26. A coaxial cable 100 communicates a fourth combined signal produced by the combiner 90 to the television 20 and the personal computer 30.

The coaxial cables 92, 94, 96 and 100 are part of an in-home coaxial distribution network. Typically, the coaxial cables 92, 94, 96 and 100 comprise 75-Ohm coaxial cables, in contrast to so-called "Thin Ethernet" 50-Ohm coaxial cables for which the 10Base2 Ethernet standard was originally created. A 10Base2 signal can be toned or otherwise processed for effective operation over 75-Ohm coaxial cable using widely-available chip sets and discrete parts. The modem and networking module 72 may serve to generate forward data signals suitable for 75-Ohm coaxial cable, and to process return signals from 75-Ohm coaxial cable. Each combined signal may have a lower frequency band for the data networking signal and an upper frequency band for the television signals. For example, the forward and return data networking signals may use a frequency spectrum from DC to approximately 25 MHz or less. This spectrum does not overlap the frequency spectrum required for the television signals.

Using the widely-available technology, the forward and return data signals can be communicated a distance of up to about 500 feet without requiring additional amplification. Combined with analog and digital video, this baseband signal can be isolated by a splitter such as a diplex filter and converted to a more common format such as 10BaseT or Universal Serial Bus (USB).

A passive splitter 102 splits a first television signal and a first Ethernet data signal from the first combined signal. The passive splitter 102 provides the first television signal to the television 12, and provides the first Ethernet data signal to a port, such as an Ethernet port, of the personal computer 22.

A passive splitter 104 splits a second television signal and a second Ethernet data signal from the second combined signal. The passive splitter 104 provides the second television signal to the television 14, and provides the second Ethernet data signal to a port, such as an Ethernet port, of the personal computer 24.

A passive splitter 106 splits a third television signal and a third Ethernet data signal from the third combined signal. The passive splitter 106 provides the third television signal to the television 16, and provides the third Ethernet data signal to a port, such as an Ethernet port, of the personal computer 26.

A passive splitter .110 splits a fourth television signal and a fourth Ethernet data signal from the fourth combined signal. The passive splitter 110 provides the fourth television signal to the television 120, and provides the fourth Ethernet data signal to a port, such as an Ethernet port, of the personal computer 30.

Using the system, the remote controls 62, 64, 66 and 70 enable independent selections of video services provided by the cable head end 32 for display by the televisions 12, 14, 16 and 20, respectively. Broadband data services provided by the cable head end 32 are delivered to the personal computers 22, 24, 26 and 30 using the in-home coaxial distribution network.

The MVDU 10 may also be upgraded to provide a personal video recording function. In this case, the MVDU 10 comprises a data storage device 112 to store video downloaded from the cable head end 32. The stored video can be selected using any of the remote control devices 62, 64, 66 and 70 for playback on any of the television sets 12, 14, 16 and 20, respectively.

To facilitate user selection of the record function, the remote control devices 62, 64, 66 and 70 may comprise a dedicated record function key, a soft key temporarily dedicated to the record function, and/or a selection key which facilitates an on-screen selection of the record function.

Each of the video processing modules 42, 44, 46 and 50 is responsive to its corresponding one of the remote control devices 62, 64, 66 and 70 to request that stored video be retrieved from the data storage device 112 for playback on the corresponding one of the television sets 12, 14, 16 and 20. To facilitate user selection of the record function, the remote control devices 62, 64, 66 and 70 may comprise a dedicated playback function key, a soft key temporarily dedicated to the playback function, and/or a selection key which facilitates an on-screen selection of the playback function.

Examples of the data storage device 112 include, but are not limited to, a magnetic storage device, an electronic storage device and an optical storage device. Examples of the magnetic storage device include, but are not limited to, a hard disk drive. Examples of the electronic storage device include, but are not limited to, an electronic memory card storage device. Examples of the optical storage device include, but are not limited to, an optical disk storage device such as a DVD-R or a DVD-RW device.

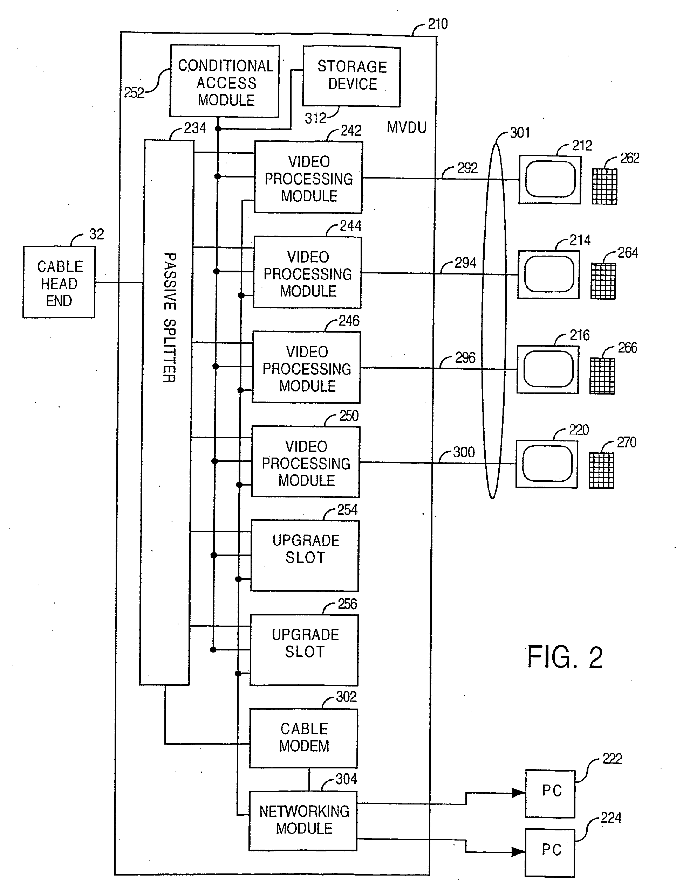

FIG. 2 is a block diagram of another embodiment of a system to provide video and broadband data services to multiple televisions and computers in a home. The system comprises another embodiment of an MVDU 210. The MVDU 210 serves to provide multi-channel digital video services to multiple television sets 212, 214, 216 and 220 in the home without the need for multiple set-top boxes within the home. Further, the MDVU 210 serves to provide broadband data services to multiple personal computers (PCs) 222 and 224 in the home.

Combined video service and broadband data service signals described with reference to FIG. 1 are provided to the home by the cable head end 32. The MVDU 210 comprises a passive splitter 234 to split incoming signals from the cable head end 32 into multiple video service signal ports and a broadband data signal port. The passive splitter 234 may be embodied by a diplex filter to separate broadband data service signals in one frequency band from video service signals in another frequency band. Other splitters, including active splitters, also are within the scope of this disclosure.

The MVDU 210 further comprises a plurality of video processing modules, one per television set in the home. For purposes of illustration and example, four video processing modules 242, 244, 246 and 250 are depicted, although any plurality of video processing modules may be employed- Each of the video processing modules 242, 244, 246 and 250 has a corresponding input coupled to a corresponding video service signal port of the passive splitter 234. Each video processing module performs video processing acts such as channel tuning, signal decoding, format converting and picture-in-picture (PIP) functions for its associated television set. A conditional access module 252 enables the video processing modules 242, 244, 246 and 250 to receive and descramble premium channels, if necessary.

Preferably, each video processing module is embodied by a removable card that facilitates installation in and removal from the MVDU 210. In this case, the MVDU 210 has a plurality of card-receiving slots to receive a plurality of video processing modules. For purposes of illustration and example, the MVDU 210 may have six card-receiving slots to receive at most six video processing modules. Thus, with four video processing modules in the MVDU 210, two card-receiving slots 254 and 256 are unoccupied. The MVDU 210 may be upgraded to accommodate more than four television sets by installing one or two video processing modules in the two card-receiving slots 254 and 256. Alternatively, some of the video processing modules 242, 244, 246 and 250 may be permanently integrated with the MVDU 210.

The system comprises a plurality of remote control devices 262, 264, 266 and 270 to facilitate independent user control of programming to the television sets 212, 214, 216 and 220, respectively. Each of the remote control devices 262, 264, 266 and 270 controls acts performed by a corresponding one of the video processing modules 242, 244, 246 and 250, respectively. Preferably, each remote control device communicates with its associated video processing module by a wireless link. Alternatively, a remote control device may communicate with a video processing module by a wireline connection.

Each video processing module generates a television signal based on a video service signal. To generate the television signal, each video processing module may include a radio frequency (RF) modulator which generates a standard television signal on a specific frequency. Examples of the standard television signal and the specific frequency are described with reference to FIG. 1.

A coaxial cable 292 communicates a first television signal produced by the video processing module 242 to the television 212. A coaxial cable 294 communicates a second television signal produced by the video processing module 244 to the television 214. A coaxial cable 296 communicates a third television signal produced by the video processing module 246 to the television 216. A coaxial cable 300 communicates a fourth television signal produced by the video processing module 250 to the television 220.

The coaxial cables 292, 294, 296 and 300 are part of an in-home coaxial distribution network 301. Typically, the coaxial cables 292, 294, 296 and 300 comprise 75-Ohm coaxial cables, although other coaxial cables are within the scope of this disclosure.

Using the system, the remote controls 262, 264, 266 and 270 enable independent selections of video services provided by the cable head end 32 for display by the televisions 212, 214, 216 and 220, respectively.

The broadband data signals split by the passive splitter 234 are provided to a cable modem 302. Examples of the cable modem 302 include, but are not limited to, a DOCSIS cable modem. The cable modem 302 extracts/demodulates the broadband data information and provides same to a home networking module 304. The home networking module 304 generates a data networking signal based on the demodulated broadband data signal. The home networking module 304 facilitates broadband data networking within a home or small business using a standard networking technology such as HomePNA, wireless, Category 5 or fiber networking.

Thus, the home networking module 304 may communicate with the personal computers 222 and 224 via either a wireless interface such as 802.11b or a wireline interface. A wireline interface such as HomePNA uses existing telephone wiring within the home for data networking. If the home has Category 5 wiring, the home networking module 304 may comprise an Ethernet switch module to enable data networking via the Category 5 wiring.

Via the home networking module 304, the cable modem 302 receives and modulates data transmitted from the personal computers 222 and 224 for transmission to the cable head end 32.

Although two personal computers 222 and 224 are depicted in FIG. 2, those having ordinary skill will recognize that other numbers of personal computers may be supported by the networking module 304.

The MVDU 210 may also be upgraded to provide a personal video recording function. In this case, the MVDU 210 comprises a data storage device 312 to store video downloaded from the cable head end 32. The stored video can be selected using any of the remote control devices 262, 264, 266 and 270 for playback on any of the television sets 212, 214, 216 and 220, respectively. Details of the PVR function are similar to those provided with reference to FIG. 1.

Thus, there have been disclosed herein several embodiments including a preferred embodiment of a centralized in-home unit to provide video and data to multiple in-home locations.

In summary, embodiments of the MVDU provide multi-channel digital/analog video services, integrate broadband data delivery and video delivery to multiple devices from a centralized location inside the home, and eliminate the need for multiple set-top boxes inside the home. An end user only needs to use a remote control to select and view preferred video programming. Video processing modules can be added and removed based on users' subscription preferences and product offerings. The MVDU may be remotely accessible for management, provisioning, maintenance, troubleshooting and upgrading. Home data networking capabilities may be provided using either an in-home coaxial distribution network or a standard-based networking technology.

Embodiments of the MVDU have an open architecture to facilitate enhanced services, value-added services, and other services to be offered. Examples of the services include, but are not limited to, Web-based services for a television audience, electronic mail, instant messaging and Web browsing. The MVDU may also be upgraded to provide a personal video recording function.

It will be apparent to those skilled in the art that the disclosed inventions may be modified in numerous ways and may assume many embodiments other than the preferred forms specifically set out and described herein.

Accordingly, it is intended by the appended claims to cover all modifications which fall within the scope of the present invention.

What is claimed is:

## Claims

1. An apparatus comprising:
a splitter to split a combined data and video service signal into a data service signal and at least one video service signal;
a modem and data networking module to generate a data networking signal based on the data service signal;
a plurality of remote control devices each to receive a user-initiated video selection;
a plurality of video processing modules each responsive to a corresponding one of the remote controls to process the video service signal based on the user-initiated video selection and to generate a corresponding television signal based thereon; and
a plurality of combiners each to combine the television signal from a corresponding one of the video processing modules with the data networking signal from the modem and networking module to form a corresponding combined television and data networking signal.

2. The apparatus of claim 1 wherein the splitter comprises a diplex filter.

3. The apparatus of claim 1 wherein the combined television and data networking signal has a lower frequency band for the data networking signal, and an upper frequency band for the television signal.

4. The apparatus of claim 3 wherein the lower frequency band is below 25 MHz.

5. The apparatus of claim 1 wherein the data networking signal is toned for communication over a 75-Ohm coaxial cable.

6. The apparatus of claim 1 further comprising:
at least one card-receiving slot to receive an additional at least one video processing module.

7. The apparatus of claim 1 wherein the remote control devices provide a video recording selection and a video playback selection, wherein the apparatus further comprises a storage device to store video from the video service signal based on the video recording selection and to playback the video based on the video playback selection, wherein each of the video processing modules is responsive to its corresponding one of the remote controls to process the video from the storage device based on the video playback selection and to generate a corresponding television signal based thereon.

8. The apparatus of claim 1 wherein the combined data and video service signal is provided by a head end of a cable television system.

9. The apparatus of claim 8 wherein the modem and data networking module comprises a cable modem.

## Patentansprüche

1. Vorrichtung, umfassend:
einen Aufteiler zum Aufteilen eines kombinierten Daten- und Videodienstsignals in ein Datendienstsignal und wenigstens ein Videodienstsignal;
ein Modem- und Datenvernetzungsmodul zum Erzeugen eines Datenvernetzungssignals auf der Grundlage des Datendienstsignals;
eine Mehrzahl an Fernsteuervorrichtungen jeweils zum Empfangen einer benutzerinitiierten Videoauswahl;
eine Mehrzahl an Videoverarbeitungsmodulen, die jeweils auf eine Entsprechende der Fernsteuervorrichtungen ansprechen, um das Videodienstsignal auf der Grundlage der benutzerinitiierten Videoauswahl zu verarbeiten und auf der Grundlage hiervon ein entsprechendes Fernsehsignal zu erzeugen; und
eine Mehrzahl an Kombinatoren jeweils zum Kombinieren des Fernsehsignals von einem Entsprechenden der Videoverarbeitungsmodule mit dem Datenvernetzungssignal von dem Modem- und Vernetzungsmodul, um ein entsprechendes kombiniertes Fernseh- und Datenvernetzungssignal zu bilden.

2. Vorrichtung nach Anspruch 1, wobei der Aufteiler ein Diplexfilter umfasst.

3. Vorrichtung nach Anspruch 1, wobei das kombinierte Fernseh- und Datenvernetzungssignal ein unteres Frequenzband für das Datenvernetzungssignal und ein oberes Frequenzband für das Fernsehsignal aufweist.

4. Vorrichtung nach Anspruch 3, wobei das untere Frequenzband unterhalb von 25 MHz liegt.

5. Vorrichtung nach Anspruch 1, wobei das Datenvernetzungssignal für eine Kommunikation über ein 75-Ohm-Koaxialkabel angepasst ist.

6. Vorrichtung nach Anspruch 1, ferner umfassend:
wenigstens einen Kartenaufnahmeschlitz zum Aufnehmen wenigstens eines zusätzlichen Videoverarbeitungsmoduls.

7. Vorrichtung nach Anspruch 1, wobei die Fernsteuervorrichtungen eine Videoaufzeichnungsauswahl und eine Videowiedergabeauswahl bereitstellen, wobei die Vorrichtung ferner eine Speichervorrichtung umfasst zum Speichern eines Videos vom Videodienstsignal auf der Grundlage der Videoaufzeichnungsauswahl und zum Wiedergeben des Videos auf der Grundlage der Videowiedergabeauswahl, wobei jedes der Videoverarbeitungsmodule auf seine Entsprechende der Fernsteuervorrichtungen anspricht, um das Video von der Speichervorrichtung auf der Grundlage der Videowiedergabeauswahl zu verarbeiten und basierend darauf ein entsprechendes Fernsehsignal zu erzeugen.

8. Vorrichtung nach Anspruch 1, wobei das kombinierte Daten- und Videodienstsignal von einer Kopfstelle eines Kabelfernsehsystems bereitgestellt wird.

9. Vorrichtung nach Anspruch 8, wobei das Modem- und Datenvernetzungsmodul einen Kabelmodem umfasst.

## Revendications

1. Appareil comprenant :
un séparateur destiné à diviser un signal de service vidéo et données combiné en un signal de service de données et au moins un signal de service vidéo ;
un module de réseautage de données et modem pour générer un signal de réseautage de données sur la base du signal de service de données ;
une pluralité de dispositifs de commande distante chacun destiné à recevoir une sélection vidéo initiée par un utilisateur ;
une pluralité de modules de traitement vidéo répondant chacun à une commande distante correspondante des commandes distantes pour traiter le signal de service vidéo sur la base de la sélection vidéo initiée par l'utilisateur et pour générer un signal de télévision correspondant basé sur celle-ci ; et
une pluralité de combinateurs chacun destiné à combiner le signal de télévision d'un module correspondant des modules de traitement vidéo avec le signal de réseautage de données du module de réseautage et modem pour former un signal de réseautage de données et de télévision combiné.

2. Appareil de la revendication 1 dans lequel le séparateur comprend un filtre diplex.

3. Appareil de la revendication 1 dans lequel le signal combiné de réseautage de données et de télévision a une bande de fréquence inférieure pour le signal de réseautage de données, et une bande de fréquence supérieure pour le signal de télévision.

4. Appareil de la revendication 3 dans lequel la bande de fréquence inférieure est sous les 25 MHz.

5. Appareil de la revendication 1 dans lequel le signal de réseautage de données est traité en tonalité pour des communications par câble coaxial de 75 Ohm.

6. Appareil de la revendication 1 comprenant en outre:
au moins une fente de réception de carte pour recevoir au moins un module de traitement vidéo supplémentaire.

7. Appareil de la revendication 1 dans lequel les dispositifs de commande distante fournissent une sélection d'enregistrements vidéo et une sélection de lectures vidéo, où l'appareil comprend en outre un dispositif de stockage pour stocker une vidéo provenant du signal de service vidéo sur la base de la sélection d'enregistrements vidéo et pour lire la vidéo sur la base de la sélection de lectures vidéo, où chacun des modules de traitement vidéo répond à sa commande distante correspondante parmi les commandes distantes pour traiter la vidéo du dispositif de stockage sur la base de la sélection de lectures vidéo et pour générer un signal de télévision correspondant basé sur celle-ci.

8. Appareil de la revendication 1 dans lequel le signal combiné de service vidéo et de données est pourvu par une tête de réseau d'un système de câblodistribution.

9. Appareil de la revendication 8 dans lequel le module de réseautage de données et modem comprend un modem câble.
